# EUROPÄISCHE PATENTSCHRIFT

(11) **EP 1 557 080 B1**
(45) Veröffentlichungstag und Bekanntmachung des Hinweises auf die Patenterteilung: **27.06.2007**
(21) Anmeldenummer: 04106773.7
(22) Anmeldetag: 21.12.2004
(51) Int. Cl.: A01F 15/08, B30B 9/30

(54) **Ballenpresse**
Bale press
Presse à balles

(30) Priorität: 20.01.2004 DE 102004002730
(43) Veröffentlichungstag der Anmeldung: 27.07.2005
(73) Patentinhaber: DEERE & COMPANY, Moline, Illinois 61265-8098 (US)
(72) Erfinder: Dubois, Jean-Yves, 70100, Cresancey (FR)
(74) Vertreter: Magin, Ludwig Bernhard

(56) Entgegenhaltungen:
- EP-A- 0 810 083
- WO-A-96/29195
- DE-U1- 9 300 054

## Beschreibung

Die Erfindung betrifft eine Ballenpresse mit einem quaderförmigen Pressraum und einer Ballenauswurfvorrichtung mit wenigstens einem in Richtung der Längserstreckung des Pressraums mittels eines Motors verschiebbaren Förderelement, welches zumindest eine erste Stellung, in der es zumindest im Wesentlichen außerhalb des Pressraums angeordnet ist, und eine zweite Stellung einnehmen kann, in der es in den Pressraum hineinragt, wobei das Förderelement durch die Wirkung des Motors aus seiner ersten Stellung in seine zweite Stellung bewegt wird.

Die WO-A-96 29 195 zeigt eine Ballenpresse mit einer Auswurfvorrichtung zum Auswerfen von Ballen aus einem Pressraum. Die Auswurfvorrichtung weist Förderelemente auf, welche durch Federwirkung aus einer ersten Stellung, in der die Förderelemente außerhalb des Pressraums angeordnet sind, in eine zweite Stellung gebracht werden können, in der die Förderelemente in den Pressraum hineinragen, um an einem Ballen anzugreifen.

Die DE-U-93 00 054 zeigt eine Ballenpresse mit einer Ballenausdrückvorrichtung, welche Zinken aufweist, die mittels eines Hydraulikzylinders in die Unterseite eines Ballens einsprießen können. Ein weiterer Verschiebeweg einer Kolbenstange des Hydraulikzylinders drück den Ballen aus der Ballenkammer hinaus.

Das der Erfindung zugrunde liegende Problem wird darin gesehen, dass die Förderelemente derartiger Ballenauswurfvorrichtungen an Ballenpressen durch Verstopfungen, beispielsweise in der Art von feuchtem Erntegut, Ästen, Steinen etc., aufgrund von Materialermüdung der Feder oder bei besonders fest gepressten Ballen nicht oder nur unzureichend in den Ballen eingreifen und diesen nicht oder ungleichmäßig fördern oder es zu Beschädigungen des Ballens kommen kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Ballenpresse mit einer Auswurfvorrichtung zur Verfügung gestellt, welche mit Förderelementen versehen ist, die sicher und gut an dem bzw. in den zu fördernden Ballen an-/eingreifen. Eine derartige Ballenauswurfvorrichtung ist an einer Ballenpresse mit einem quaderförmigen Pressraum vorgesehen. Bei einer derartigen Ballenpresse kann es sich um eine industrielle Presse, beispielsweise zum Pressen von Papier, Gewebe bzw. Stoffen, Abfällen etc., insbesondere aber um eine Presse für landwirtschaftliches Erntegut, beispielsweise in der Art einer Grossballenpresse, handeln. Die Ballenauswurfvorrichtung weist wenigstens ein in Richtung der Längserstreckung mittels eines Motors verschiebbares Förderelement auf, welches zumindest eine erste Stellung, in der es zumindest im Wesentlichen außerhalb des Pressraums angeordnet ist, und eine zweite Stellung einnehmen kann, in der es in den Pressraum hineinragt. In der ersten Stellung wirkt es nicht mit in dem Pressraum befindlichem Material bzw. einem dort angeordneten Ballen zusammen bzw. greift nicht an einem solchen an/in einen solchen ein und stellt somit keine Behinderung des Gutstroms bzw. des Ballentransports während eines normalen Pressbetriebes dar. In seiner zweiten Stellung ragt das Förderelement in den Pressraum hinein und greift somit in das Material/den Ballen ein bzw. an diesem an, um ihn aus dem Pressraum zu transportieren bzw. auszuwerfen. Das Förderelement kann durch den Motor nicht nur in Längsrichtung des Pressraums bewegt, sondern auch aus seiner ersten Stellung in seine zweite Stellung gebracht werden. Durch diese motorisierte Betätigung wird sichergestellt, dass das Förderelement auch im Falle einer Behinderung, Verstopfung o.ä. vollständig in den Ballen bzw. das im Pressraum vorhandene Material eingreift, um dieses vollständig und im Falle eines gebundenen Ballens beschädigungsarm bzw. -frei aus dem Pressraum zu entfernen. Die Ballenauswurfvorrichtung weist wenigstens zwei zumindest im Wesentlichen parallele Leisten auf, so das Förderelement dadurch bewegt werden kann, dass es mit einer oder beiden Leisten verbunden ist und die Leisten gegeneinander bewegt bzw. mit Bezug zueinander verschoben werden. Die Bewegung des Förderelements aus seiner ersten in seine zweite Stellung kann in einfacher Weise durch den gleichen Motor erzielt werden, indem das Förderelement sowohl an einer ersten der beiden Leisten als auch an einer zweiten Leiste angelenkt ist, um so bei einem Verschieben der Leisten gegeneinander bezogen auf die Leisten aufgerichtet bzw. in eine zumindest im Wesentlichen senkrechte Stellung gebracht zu werden.

Um die Leiste(n) bzw. das Förderelement zu bewegen, kann der Motor mit einer der Leisten zusammenwirken bzw. an einer der Leisten direkt oder indirekt beispielsweise über ein oder mehrere Gestänge oder Getriebe angreifen.

Es kann vorgesehen sein, dass die Leisten nebeneinander bzw. zumindest im Wesentlichen horizontal benachbart vorgesehen sind. Ein möglichst geringer Raumbedarf und ein günstiger Bewegungsablauf des Förderelements ergibt sich, für den Fall dass dieses sowohl an der ersten als auch an der zweiten Leiste angelenkt ist und somit bei einer Verschiebung der Leisten gegeneinander eine Kurve beschreibt, wenn die Leisten zumindest im Wesentlichen vertikal benachbart bzw. übereinander angeordnet sind.

Sind die Leisten vertikal benachbart bzw. übereinander angeordnet, so greift der Motor vorzugsweise an der unteren der Leisten an, da auf diese Weise auf zwischengeschaltete Hebel oder Gestänge verzichtet werden kann, ohne dass der Motor mit dem Pressraum bzw. einem Boden desselben in dichter baulicher Nähe angeordnet sein muss, durch welche es zu Behinderungen oder Einschränkungen des Bauraums bzw. der Motorabmessung kommen könnte.

Der Motor könnte beispielsweise in der Art eines Elektromotors oder jedes anderen geeigneten Motors ausgebildet sein. Besonders günstig ist aber die Verwendung eines Hydraulikmotors, da Ballenpressen oder diese ziehende Zugfahrzeuge häufig bereits mit einer Hydraulikdruckquelle versehen sind, welche auch geeignet ist, diesen zusätzlichen Hydraulikmotor mit Hydraulikdruck zu versorgen.

Um einen gleichmäßigen Ballen- bzw. Materialauswurf zu gewährleisten, einer Beschädigung des Ballens durch eine zu hohe punktuelle Krafteinwirkung entgegenzuwirken und um den Auswurfvorgang durch eine Reduzierung der notwendigen Auswurfhübe zu beschleunigen, kann die Ballenauswurfvorrichtung mehrere Förderelemente aufweisen. Die Förderelemente können versetzt in dem Pressraum oder an einer oder mehreren Flächen des Pressraums, wie beispielsweise dem Boden desselben, vorgesehen sein. Ein einfacher Antrieb ohne eine Verwendung von Getrieben etc. durch den Motor ergibt sich aber, wenn die Förderelemente in einer oder mehreren sich in Ballenauswurfrichtung erstreckenden Reihe(n) angeordnet sind.

Jeder Reihe kann eine erste und eine zweite Leiste zugeordnet sein, wobei die Leisten beispielsweise derart verbunden sein können, dass sie gemeinsam durch den Motor bewegt werden, indem sie beispielsweise über eine Querstrebe verbunden sind, die mit ihnen verschraubt, verschweißt o.ä. verbunden ist.

Sind die Leisten bezogen auf die Längserstreckung des Pressraums verschiebbar vorgesehen, so kann neben der Bewegung des Förderelements in den Pressraum und aus diesem heraus auch die eigentliche Auswurfbewegung des Förderelements durch eine Bewegung der Leisten vorzugsweise durch den Motor vollzogen werden. Dies kann dadurch erfolgen, dass die Leisten zuerst gegeneinander verschoben werden, um das Förderelement in den Pressraum bzw. aus diesem heraus zu bewegen, um im Anschluss bezogen auf den Pressraum in Längsrichtung weiter bewegt zu werden, so dass das Förderelement eine Auswurfbewegung ausführt und der Ballen in Richtung einer Auswurföffnung des Pressraums transportiert wird.

In der Zeichnung ist ein nachfolgend näher beschriebenes Ausführungsbeispiel der Erfindung dargestellt. Es zeigt:
- Fig. 1: eine erfindungsgemäße Ballenpresse mit einer Ballenauswurfvorrichtung in Seitenansicht und schematischer Darstellung,
- Fig. 2: die Ballenauswurfvorrichtung alleine in einer perspektivischen Ansicht von oben und
- Fig. 3 - 5: eine Seitenansicht der Ballenauswurfvorrichtung mit Förderelementen, die sich in unterschiedlichen Stellungen befinden.

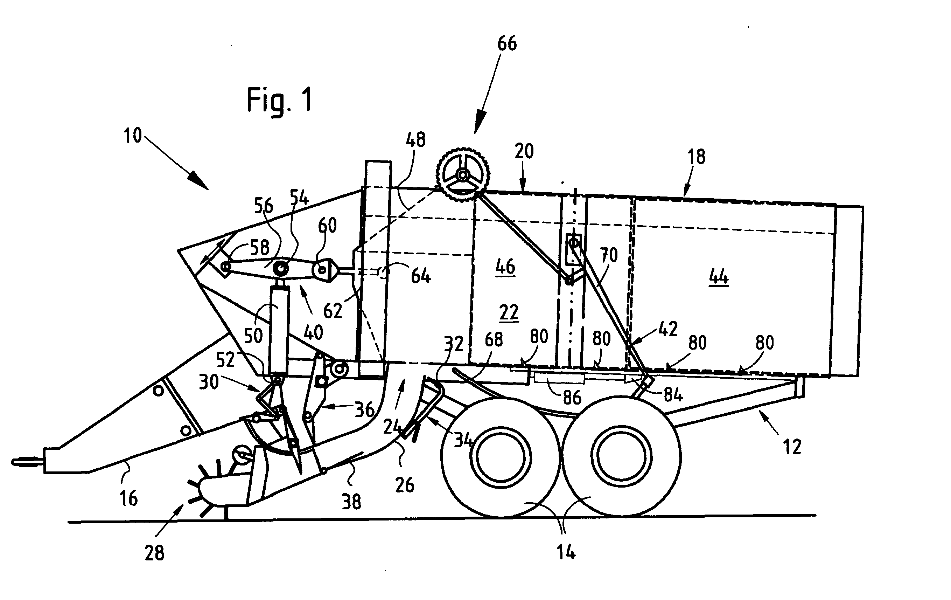

In Figur 1 ist eine Ballenpresse 10 in der Form einer Großballenpresse zum Herstellen quaderförmiger Ballen gezeigt, die einen Rahmen 12 enthält, der auf Bodenstützrädern 14 in Tandemanordnung abgestützt ist. Eine Deichsel 16 ist an den Rahmen 12 angeschlossen und erstreckt sich von diesem aus nach vorne und ist so ausgebildet, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Aufnahmevorrichtung 28 in der Art einer Pick-up und mit einer zur Mitte fördernden Schnecke ist vor dem Zufuhrkanal 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte stromabwärts von Fingern 32 einer Rückhaltevorrichtung 34 angesammelt hat, wobei die Rückhaltevorrichtung 34 für eine Bewegung zwischen einer Rückhaltestellung, in der die Finger 32 in der Nähe des Guteinlasses 24 in den Zufuhrkanal 26 hineinragen, und einer Zufuhrstellung, in der die Finger 32 aus dem Zufuhrkanal 26 herausgezogen sind, schwenkbar montiert sind, um es der Ladung Erntegut zu ermöglichen, mittels eines Ladegabelzusammenbaus 36 über den Guteinlass 24 in den Pressraum 18 hineingestopft zu werden. An einer vorderen unteren Stelle des Zufuhrkanals 26 ist eine federbelastete Klappe 38 schwenkbar montiert, die in Abhängigkeit von sich in dem Zufuhrkanal 26 befindlichem Erntegut schwenkt, das eine gewünschte Dichte erreicht, um die Bestromung eines elektrischen Steuerkreislaufs (nicht gezeigt) zu bewirken, der entsprechende Antriebsverbindungen herstellt, die zuerst bewirken, dass die Rückhaltevorrichtung 34 sich so bewegt, dass sie die Finger 32 aus der sperrenden in die in Figur 1 gezeigte Stellung zurückzieht, und dann den Ladegabelzusammenbau 36 derart aktiviert, dass daraufhin die Verdichtergabel 30 durch den Zufuhrkanal 26 gleiten und die Ladung des Ernteguts in den Pressraum 18 bewegen kann. Wenn die Ladung des Ernteguts einmal in den Pressraum 18 gestopft ist, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Pressraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird ein Nadelzusammenbau 42 zum Liefern von Bindegarn, der mehrere gekrümmte Nadeln 68 enthält, betätigt, um mehrere Garnstränge einer entsprechenden Anzahl nicht gezeigter Knoter zuzuführen, die so funktionieren, dass sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Pressraum 18 gestopft werden.

Nimmt man wieder Bezug auf die Einzelheiten des Kolbenmechanismus 40, dann ist zu erkennen, dass letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 angeordnet ist. Diese Bewegung des Presskolbens 48 hat zum Ergebnis, dass Ladungen von Erntegut, die aus dem Zufuhrkanal 26 in den Pressraum 18 eingeführt werden, gegen einen Stapel von Erntegut verdichtet werden, was einen teilweise gebildeten Ballenteil 46 und/oder den kompletten Ballen 44 einschließt. Der Kolbenmechanismus 40 enthält weiterhin einen als aus- und einfahrbare Betätigungsvorrichtung ausgebildeten Antrieb 50, der hier als eine doppeltwirkende Hydraulikzylinder-Kolben-Einheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64, etwa mittels eines Bolzens mit dem Presskolben 48 verbunden ist. Es wird hier darauf hingewiesen, dass die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, dass die Reaktionskraft des Ernteguts, das auf den Presskolben 48 wirkt, im Wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, dass die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, dass der Presskolben 48 den Gleiter eines Gleitkurbelmechanismus bildet, der einen ersten Lenker 56 als Kurbelarm, einen zweiten Lenker 62 und die Lenker 94 als Pleuelstange enthält. Obwohl sich das von den Lenkern 56, 62 und 94 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des Weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben. Es wird darauf hingewiesen, dass anstelle dieses speziellen Antriebs mit einem Hydraulikmotor auch ein herkömmlicher Kurbeltrieb anwendbar ist.

Der Kolbenmechanismus 40 enthält den Presskolben 48, der mittels des Antriebs 50 zwischen zwei Endstellungen verschiebbar ist, wie dies in der EP-A2-0 940 072 beschrieben ist.

Die Lagerstelle 58 zur Anlenkung des ersten Lenkers 56 ist sowohl in der Höhe als auch in der Längsrichtung des Pressraums 18 z. B. auf einer schiefen Ebene derart verstellbar ausgebildet, dass sich die beiden Lenker 56, 62 in ihrer gestreckten Stellung jeweils in der Längsmittenebene des Pressraums 18 erstrecken. Allerdings ist dies nur eine bevorzugte Ausführung, auf die vielfach verzichtet werden kann. Je nach der Ausbildung der Führung des Presskolbens 48 können die Lenker 56 und 62 auch außermittig des Pressraums 18 angreifen, d. h. die Lagerstelle 58 des Lenkers 56 bleibt unverändert.

Auf der Oberseite des Gehäuseoberteils 20 und rückwärtig des Zufuhrkanals 26 ist in bekannter Weise ein Knoterzusammenbau 66 vorgesehen, in den die Nadeln 68 des Nadelzusammenbaus 42 eintreten können. Der Nadelzusammenbau 42 enthält auf jeder Seite einen Nadeltragarm 70, der in einer vertikalen Ebene schwenkbar ist und die Nadeln 68 durch den Pressraum 18 hindurch mit dem nicht gezeigten Garn zu dem Knoterzusammenbau 66 bewegt, sobald ein Ballen 44 gebunden wird.

Das Gehäuseoberteil 20 weist weiter einen Boden 23 auf, der in herkömmlicher Bauart aus einem gegebenenfalls profilierten Stahlblech gebildet ist, das sich über die gesamte Länge des Pressraums 18 erstreckt und unbeweglich auf dem Rahmen 12 angeordnet ist. Der Boden 23 weist den Guteinlass 24 für den Zufuhrkanal 26 und eine Eintrittsöffnung für die Nadeln 68 auf. In einem rückwärtigen Bereich des Gehäuseoberteils 20 können bekannte verstellbare Klappen vorgesehen sein, die dem Ballen 44 einen bestimmten Bewegungswiderstand entgegensetzen.

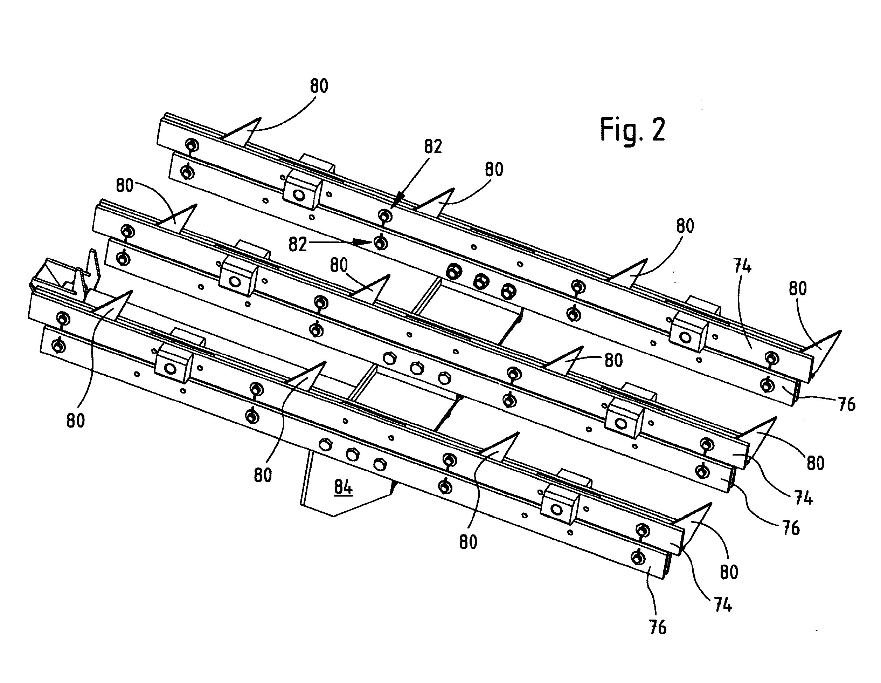

Unterhalb des Bodens 23 ist eine Ballenauswurfvorrichtung 72 vorgesehen, welche mehrere sich in Längsrichtung des Pressraums 18 erstreckende Leisten 74, 76 aufweist (siehe nun auch Fig. 2). Die Leisten 74, 76 sind in parallelen Reihen angeordnet, wobei in dem gezeigten Ausführungsbeispiel drei Reihen, eine mittige Reihe und eine linke bzw. rechte Reihe gleichmäßig über die Breite des Pressraums 18 verteilt sind. Jede Reihe weist jeweils eine erste Leiste 74 und eine zweite Leiste 76 auf, wobei die erste Leiste 74 vertikal oberhalb der zweiten Leiste 76 angeordnet ist.

Im vorliegenden Ausführungsbeispiel wird jede der Leisten 74, 76 wiederum durch zwei beabstandet angeordnete Flachprofile 78 gebildet. Zwischen den Flachprofilen 78 ist eine Mehrzahl von Förderelementen 80 vorgesehen. Die Förderelemente 80 sind jeweils mit der oberen und der unteren Leiste 74, 76 bzw. den Flachprofilen 78 an Anlenkpunkten 82 gelenkig verbunden. Der Boden 23 ist im Bereich der Leisten 74, 76 und Förderelemente 80 derart geschlitzt ausgebildet, dass die Förderelemente 80 wie dies im Folgenden genauer beschreiben wird, in den Pressraum 18 ein- und austreten bzw. bezogen auf diesen bewegt werden können.

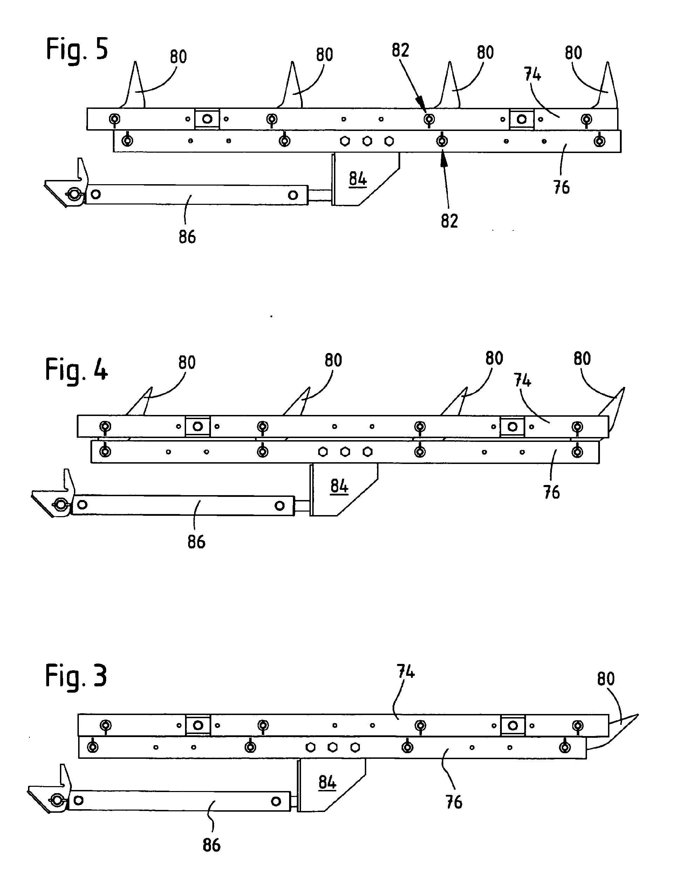

Wie dies am Besten den Figuren 3 bis 5 in Verbindung mit Fig. 2 entnommen werden kann, sind die unteren Leisten 76 mittels einer Konsole 84 miteinander fest verbunden. An dieser Konsole greift ein Motor 86 in der Art eines sich in Längsrichtung des Pressraums 18 erstreckenden, vorzugsweise doppeltwirkenden Hydraulikzylinders an, welcher andernends an dem Rahmen 12 angelenkt ist.

Im Folgenden soll nun die Funktion der Ballenauswurfvorrichtung 72 genauer beschrieben werden.

Während des normalen Betriebs der Ballenpresse 10 ist die Ballenauswurfvorrichtung 72 deaktiviert und befindet sich in ihrer in Fig. 3 gezeigten Stellung, in der der Motor 86 bzw. der Kolben des Hydraulikmotors eingefahren ist und sich die Förderelemente 80 in einer Stellung befinden, in der sie nicht in den Pressraum 18 hineinragen und somit den Ballentransport durch den Presskolben 48 nicht behindern. Die Anlenkpunkte 82 der Förderelemente 80 an den Leisten 74, 76 sind voneinander in vertikaler Richtung beabstandet, wobei der Anlenkpunkt 82 an der unteren Leiste 76 bezogen auf den Pressraum 18 rückwärts des Anlenkpunktes 82 an der oberen Leiste 74 angeordnet ist.

Soll ein sich in dem Pressraum 18 der Ballenpresse 10 befindlicher Ballen 44 oder Ballenteil 46 beispielsweise nach Abschluss der Erntearbeiten oder zum Zwecke der Wartung oder Reparatur aus diesem entfernt werden, wird eine Bedienungsperson die Ballenauswurfvorrichtung 72 aktivieren. Diese Aktivierung kann beispielsweise durch eine an der Ballenpresse oder einem mit der Ballenpresse verbundenen Zugfahrzeug vorgesehenen Steuereinrichtung erfolgen. Diese Steuereinrichtung steuert den Motor 86 an bzw. verbindet den Hydraulikmotor mit einer nicht gezeigten Hydraulikdruckquelle an der Ballenpresse 10 oder an dem Zugfahrzeug.

Ist der Motor 86 aktiviert bzw. wird er mit Hydraulikdruck derart beaufschlagt, dass sein Kolben bezogen auf den Zylinder ausfährt, so wird die untere Leiste 76, die über die Konsole 84 mit dem Motor 86 verbunden ist, von dem Presskolben 48 weg in Richtung des rückwärtigen Bereichs des Gehäuseoberteils 20 bewegt. Die untere Leiste 76 verschiebt sich durch die Wirkung des Motors 86 bezogen auf die obere Leiste 74 nach rückwärts, wodurch die Anlenkpunkte 82 sich in horizontaler Richtung annähern und aneinander vorbeigelangen (Fig. 4) bis sie in ihre Endstellung (Fig. 5) gelangen, in der der Anlenkpunkt 82 der oberen Leiste 74 im dargestellten Ausführungsbeispiel vor dem Anlenkpunkt 82 an der unteren Leiste 76 angeordnet ist. Es ist aber auch eine abweichende Geometrie möglich.

Da der Abstand der Anlenkpunkte 82 durch das starre Förderelement 80 bestimmt wird, kommt es durch die horizontale Annäherung der Anlenkpunkte 82 zu einer Vergrößerung des vertikalen Abstands, wodurch die beiden Leisten 74, 76 sich während des Verschiebens voneinander entfernen (Fig. 4) um sich im Anschluss wieder aneinander anzunähern.

Die beschriebene Bewegung der Anlenkpunkte bewirkt eine entsprechende Bewegung der Förderelemente 80 in der Art, dass sich diese aus ihrer außerhalb des Pressraums 18 angeordneten, im Wesentlichen vertikalen Außerbetriebs-Stellung in eine im Wesentlichen vertikale Stellung erheben, in der sie durch Schlitze in dem Boden 23 in den Pressraum 18 hineinragen und in den dort angeordneten Ballen 44 bzw. Ballenteil 46 eingreifen. Wenn sich die Förderelemente 80 nun in ihrer in den Pressraum 18 hineinragenden Stellung befinden, bewirkt ein weiteres Wirken des Motors 84 bzw. ein weiteres Ausfahren des Kolbens des Hydraulikmotors, dass beide Leisten 74, 76 bezogen auf den Pressraum 18 nach rückwärts verschoben werden, wodurch die Förderelemente 80 sich in den Schlitzen in dem Boden ebenfalls nach rückwärts verschieben und den Ballen 44 bzw. Ballenteil 46 aus dem Pressraum 18 fördern.

Um die Förderelemente 80 nach Auswurf des Ballens oder zur Durchführung eines erneuten Auswurfhubes erneut in ihre erste Stellung zu bringen, wird der Motor 84 eingefahren bzw. der Kolben des Hydraulikmotors wieder in seine eingefahrene Stellung gebracht, wodurch zuerst die Leisten 74, 76 mit Bezug zueinander verschoben und somit die Förderelemente 80 in ihre AußerBetriebsstellung und im Anschluss die Leisten 74, 76 selbst in ihre eingefahrene Stellung gebracht werden.

Durch die beschriebene Anordnung wird sichergestellt, dass die Förderelemente 80 in den auszuwerfenden Ballen 44 oder Ballenteil 86 eingreifen, unabhängig davon, ob dieser besonders dicht und somit fest gepresst ist oder Verstopfungen bzw. Behinderungen vorhanden sind, da sie aktiv durch die Wirkung des Motors 84 in den Ballen 44 bzw. Ballenteil 86 hineingedrückt und nicht nur durch die Wirkung einer Feder o.ä. beaufschlagt werden. Darüber hinaus werden die Förderelemente 80 beim Zurückfahren für einen erneuten Auswurfhub, wenn sich der Ballen 44 bzw. Ballenteil 46 noch in dem Pressraum 18 befindet, wiederum aktiv in ihre erste Stellung, in der sie nicht in den Pressraum 18 hineinragen, gebracht, bevor sie bezogen auf den Pressraum 18 eingefahren werden. Auf diese Weise wird Beschädigungen des auszuwerfenden Ballens 44 des Ballenteils 46 sowie Verstopfungen durch abgerissenes Erntegut bzw. Material entgegengewirkt.

## Patentansprüche

1. Ballenpresse (10) mit einem quaderförmigen Pressraum (18) und einer Ballenauswurfvorrichtung (72) mit wenigstens einem in Richtung der Längserstreckung des Pressraums (18) mittels eines Motors (86) verschiebbaren Förderelement (80), welches zumindest eine erste Stellung, in der es zumindest im Wesentlichen außerhalb des Pressraums (18) angeordnet ist, und eine zweite Stellung einnehmen kann, in der es in den Pressraum (18) hineinragt, wobei das Förderelement (80) durch die Wirkung des Motors (86) aus seiner ersten Stellung in seine zweite Stellung bewegt wird, **dadurch gekennzeichnet, dass** die Ballenauswurfvorrichtung (72) wenigstens zwei zumindest im Wesentlichen parallele Leisten (74, 76) aufweist, welche sich vorzugsweise in Längsrichtung des Pressraums (18) erstrecken und gegeneinander verschiebbar vorgesehen sind, wobei das Förderelement (80) mit beiden Leisten (74, 76) derart gelenkig verbunden ist, dass es durch eine Bewegung der Leisten (74, 76) gegeneinander aus einer seiner Stellungen in die andere Stellung gebracht werden kann.

2. Ballenpresse nach Anspruch 1, **dadurch gekennzeichnet, dass** der Motor (86) mit einer der Leisten (76) zusammenwirkt.

3. Ballenpresse nach Anspruch 1 oder 2, **dadurch gekennzeichnet, dass** die jeweiligen Anlenkpunkte (82) des Förderelements an den Leisten (74, 76) vertikal beabstandet sind.

4. Ballenpresse nach einem oder mehreren der vorherigen Ansprüche, **dadurch gekennzeichnet, dass** die Leisten (74, 76) zumindest im Wesentlichen vertikal benachbart angeordnet sind.

5. Ballenpresse nach Anspruch 4, **dadurch gekennzeichnet, dass** der Motor (86) an der unteren der Leisten (74, 76) angreift.

6. Ballenpresse nach einem oder mehreren der vorherigen Ansprüche, **dadurch gekennzeichnet, dass** der Motor (86) ein Hydraulikmotor ist.

7. Ballenpresse nach einem oder mehreren der vorherigen Ansprüche, **dadurch gekennzeichnet, dass** die Ballenauswurfvorrichtung (72) mehrere Förderelemente (80) aufweist, welche vorzugsweise in einer oder mehreren sich in Ballenauswurfrichtung erstreckenden Reihe(n) angeordnet sind.

8. Ballenpresse nach Anspruch 7, **dadurch gekennzeichnet, dass** jeder Reihe zumindest eine erste und eine zweite Leiste (74, 76) zugeordnet ist.

9. Ballenpresse nach einem oder mehreren der vorherigen Ansprüche, **dadurch gekennzeichnet, dass** die Leisten (74, 76) bezogen auf die Längserstreckung des Pressraums (18) vorzugsweise durch den Motor (76) verschiebbar sind.

## Claims

1. Bale press (10) with a cuboidal baling chamber (18) and a bale ejection arrangement (72) with at least one conveyor element (80) which can be shifted in the direction of the longitudinal extent of the baling chamber (18) by means of a motor (86) and which can occupy at least one first position, in which it is arranged at least substantially outside the baling chamber (18), and a second position, in which it projects into the baling chamber (18), wherein the conveyor element (80) is moved from its first position into its second position by the action of the motor (86), **characterized in that** the bale ejection arrangement (72) has at least two at least substantially parallel laths (74, 76) which preferably extend in the longitudinal direction of the baling chamber (18) and are provided in a manner such that they can be shifted in relation to one another, the conveyor element (80) being connected in an articulated manner to the two laths (74, 76) such that it can be brought from one of its positions into the other position by movement of the laths (74, 76) in relation to each other.

2. Bale press according to Claim 1, **characterized in that** the motor (86) interacts with one of the laths (76).

3. Bale press according to Claim 1 or 2, **characterized in that** the respective connecting points (82) of the conveyor element to the laths (74, 76) are spaced apart vertically.

4. Bale press according to one or more of the preceding claims, **characterized in that** the laths (74, 76) are arranged at least substantially vertically adjacent.

5. Bale press according to Claim 4, **characterized in that** the motor (86) acts on the lower of the laths (74, 76).

6. Bale press according to one or more of the preceding claims, **characterized in that** the motor (86) is a hydraulic motor.

7. Bale press according to one or more of the preceding claims, **characterized in that** the bale ejection arrangement (72) has a plurality of conveyor elements (80) which are preferably arranged in one or more rows extending in the bale ejection direction.

8. Bale press according to Claim 7, **characterized in that** each row is assigned at least one first and one second lath (74, 76).

9. Bale press according to one or more of the preceding claims, **characterized in that** the laths (74, 76) can be shifted with respect to the longitudinal extent of the baling chamber (18) preferably by means of the motor (76).

## Revendications

1. Presse à balles (10) comportant une chambre de formage de balles (18) parallélépipédique et un dispositif d'éjection de balles (72) avec au moins un élément de transport (80), qui est mobile au moyen d'un moteur (86) dans le sens de la dimension longitudinale de la chambre de formage de balles (18) et qui peut être amené au moins dans une première position, dans laquelle il est disposé au moins sensiblement en dehors de la chambre de formage de balles (18), et dans une deuxième position, dans laquelle il est engagé dans la chambre de formage de balles (18), l'élément de transport (80) étant déplacé par l'action du moteur (86) hors de sa première position dans sa deuxième position, **caractérisée en ce que** le dispositif d'éjection de balles (72) comporte au moins deux tiges (74, 76) au moins sensiblement parallèles, qui s'étendent de préférence dans le sens longitudinal de la chambre de formage de balles (18) et sont prévues pour pouvoir se déplacer l'une contre l'autre, l'élément de transport (80) étant assemblé de manière articulée avec les deux tiges (74, 76), de telle sorte que, par un mouvement des tiges (74, 76), il peut être amené hors de l'une de ses positions dans l'autre position.

2. Presse à balles selon la revendication 1, **caractérisée en ce que** le moteur (86) coopère avec l'une des tiges (76).

3. Presse à balles selon la revendication 1 ou 2, **caractérisée en ce que** les points d'articulation (82) respectifs de l'élément de transport contre les tiges (74, 76) sont situés à distance verticale l'un de l'autre.

4. Presse à balles selon une ou plusieurs des revendications précédentes, **caractérisée en ce que** les tiges (74, 76) sont montées à proximité l'une de l'autre au moins sensiblement dans le sens vertical.

5. Presse à balles selon la revendication 4, **caractérisée en ce que** le moteur (86) entre en contact avec l'une des tiges (74, 76), à savoir la tige inférieure.

6. Presse à balles selon une ou plusieurs des revendications précédentes, **caractérisée en ce que** le moteur (86) est un moteur hydraulique.

7. Presse à balles selon une ou plusieurs des revendications précédentes, **caractérisée en ce que** le dispositif d'éjection de balles (72) comporte plusieurs éléments de transport (80), qui sont disposés de préférence en une ou plusieurs rangées qui sont orientées dans la direction d'éjection de la balle.

8. Presse à balles selon la revendication 7, **caractérisée en ce qu'**à chaque rangée est associée au moins une première et une deuxième tiges (74, 76).

9. Presse à balles selon une ou plusieurs des revendications précédentes, **caractérisée en ce que** les tiges (74, 76) sont mobiles par rapport à la dimension longitudinale de la chambre de formage de balles (18), de préférence au moyen du moteur (86).
